# FASCICULE DE BREVET EUROPEEN

(11) **EP 2 152 582 B1**
(45) Date de publication et mention de la délivrance du brevet: **29.02.2012**
(21) Numéro de dépôt: 08760269.4
(22) Date de dépôt: 30.05.2008
(51) Int. Cl.: B64D 29/08, B64D 33/04, F02K 1/72

(54) **ENSEMBLE MOTEUR POUR AERONEF A NACELLE COULISSANTE**
ANTRIEBSANORDNUNG FÜR EIN FLUGZEUG MIT GLEITGONDEL
PROPULSION ASSEMBLY FOR AIRCRAFT WITH SLIDING NACELLE

(30) Priorité: 01.06.2007 FR 0755409
(43) Date de publication de la demande: 17.02.2010
(73) Titulaire: AIRBUS OPERATIONS, 31060 Toulouse (FR)
(72) Inventeur: JOURNADE, Frédéric, F-31100 Toulouse (FR); LAFONT, Laurent, F-31320 Pechbusque (FR)
(74) Mandataire: Ilgart, Jean-Christophe
(86) Numéro de dépôt international: PCT/EP2008/056680
(87) Numéro de publication internationale: WO 2008/145725

(56) Documents cités:
- EP-A- 0 540 193
- WO-A-2008/102068
- FR-A- 1 579 651
- FR-A- 2 349 738
- US-A- 4 228 651
- US-A- 4 373 328

## Description

### DOMAINE TECHNIQUE

La présente invention se rapporte de façon générale à un ensemble moteur pour aéronef, du type comprenant un turboréacteur, un mât d'accrochage, ainsi qu'une nacelle montée sur le mât d'accrochage et entourant le turboréacteur.

Ce type de mât d'accrochage, également appelé « EMS » (de l'anglais « Engine Mounting Structure »), permet par exemple de suspendre un turboréacteur au-dessous de la voilure de l'aéronef, ou bien de monter ce turboréacteur au-dessus de cette même voilure, ou bien encore de monter un turboréacteur sur une partie arrière du fuselage.

### ÉTAT DE LA TECHNIQUE ANTÉRIEURE

De façon connue, le mât d'accrochage d'un tel ensemble moteur est prévu pour constituer l'interface de liaison entre un moteur, du type turboréacteur, et une voilure de l'aéronef équipée de cet ensemble. Il permet de transmettre à la structure de cet aéronef les efforts générés par son moteur associé, et autorise également le cheminement du carburant, des systèmes électriques, hydrauliques, et air entre le moteur et l'aéronef.

Afin d'assurer la transmission des efforts, le mât comporte une structure rigide, par exemple du type « caisson », c'est-à-dire formée par l'assemblage de longerons et de panneaux latéraux raccordés entre eux par l'intermédiaire de nervures transversales.

Un système de montage est interposé entre le moteur et la structure rigide du mât, ce système comportant globalement une pluralité d'attaches moteur, réparties habituellement en attache(s) avant solidaire(s) du carter de soufflante du moteur et en attache(s) arrière solidaire(s) du carter central de ce même moteur.

De plus, le système de montage comprend un dispositif de reprise des efforts de poussée générés par le moteur. Dans l'art antérieur, ce dispositif prend par exemple la forme de deux bielles latérales raccordées d'une part à une partie arrière du carter de soufflante du moteur, et d'autre part à une attache montée sur la structure rigide du mât, par exemple une attache arrière.

A titre indicatif, il est précisé que le mât d'accrochage est associé à un second système de montage interposé entre ce mât et la voilure de l'aéronef, ce second système étant habituellement composé de deux ou trois attaches.

Enfin, le mât est pourvu d'une structure secondaire assurant la ségrégation et le maintien des systèmes tout en supportant des carénages aérodynamiques.

Ces carénages aérodynamiques forment un assemblage sensiblement continu avec la nacelle équipant l'ensemble moteur, cette nacelle solidaire du mât étant prévue autour du turboréacteur.

De façon connue de l'homme du métier, la nacelle comprend habituellement des capots en forme de C articulés sur la structure primaire/rigide du mât. Le plus souvent, ces capots supportent les systèmes d'inversion de la poussée moteur. L'ouverture des capots permet l'accès au corps du moteur pour les opérations de maintenance, et pour la dépose de celui-ci dans la direction verticale.

La rigidité des deux capots en forme de C est assurée en complétant le système charnières-verrous par des bielles de compression, également dénommées « bumpers », ces bielles étant globalement agencées entre les extrémités en regard deux à deux des capots, au niveau de leurs charnières et de leurs verrous. A cet égard, il est noté que dans certains cas, la rigidité est légèrement augmentée en remplaçant toute ou partie des bielles de compression par des vérins ou verrous déportés, permettant le passage d'efforts de traction s'exerçant selon la direction transversale de l'ensemble moteur.

Bien que cette conception soit largement répandue, elle présente néanmoins plusieurs inconvénients, parmi lesquels on compte celui du manque de rigidité de la nacelle, et également celui de la non-optimisation du traitement acoustique de la nacelle.

En effet, la capacité structurale de la nacelle à atténuer les déformations du turboréacteur est intrinsèquement limitée par la concentration des efforts au niveau des éléments de fermeture tels que les charnières, les verrous, les bielles de compression et autres vérins ou verrous déportés. Ainsi, la nacelle disposant d'une rigidité limitée ne peut s'opposer aux déformations du turboréacteur de manière satisfaisante, et en particulier à la flexion longitudinale plus ou moins importante de ce dernier, à savoir une flexion résultant d'un couple exercé selon une direction transversale de l'aéronef.

Lorsqu'une telle flexion longitudinale survient, notamment durant les phases de décollage et d'atterrissage de l'aéronef, on rencontre alors des frottements élevés entre les pales tournantes de compresseur et de turbine, et le carter central du moteur. Pour éviter ces frottements, des jeux nominaux importants peuvent être prévus entre les pales et le carter, mais au détriment des performances globales de l'aéronef.

De plus, il est noté que le phénomène de flexion longitudinale susmentionné, et donc celui de frottement des pales tournantes, est largement accentué par le fait que sur les turboréacteurs actuels, la recherche d'un taux de dilution toujours plus important amène inéluctablement les concepteurs à augmenter le diamètre de la soufflante par rapport à celui du coeur (de l'anglais « core ») du turboréacteur.

La conséquence principale des frottements rencontrés réside dans une baisse des performances globales de l'aéronef, ainsi que dans une usure prématurée du moteur, qui est naturellement néfaste à la durée de vie de celui-ci.

Par ailleurs, il est à observer que d'autres phénomènes de flexion du moteur, susceptibles de provoquer des frottements entre les pales tournantes de compresseur et de turbine et le carter central du moteur, peuvent survenir suite à des rafales s'exerçant par exemple verticalement ou horizontalement.

En outre, les deux capots en forme de C ne forment qu'une enveloppe discontinue autour du turboréacteur, ce qui ne permet pas de former une isolation acoustique performante en raison de la discontinuité de traitement observée, alors que la nécessité de réduire le bruit en aval de la soufflante du moteur constitue une préoccupation toujours plus conséquente.

Le document US 4,373,328 qui décrit toutes les caractéristiques du préambule de la revendication 1 est considéré comme le document de l'art antérieur le plus proche.

### EXPOSÉ DE L'INVENTION

L'invention a donc pour but de proposer un ensemble moteur pour aéronef remédiant au moins partiellement aux inconvénients mentionnés ci-dessus relatifs aux réalisations de l'art antérieur, et également de présenter un aéronef disposant d'au moins un tel ensemble.

Pour ce faire, l'invention a pour objet un ensemble moteur pour aéronef comprenant un turboréacteur, un mât d'accrochage du turboréacteur, ainsi qu'une nacelle montée sur le mât d'accrochage et entourant ledit turboréacteur, ladite nacelle comportant au moins une portion de nacelle mobile formant enveloppe d'un seul tenant tout autour d'une section du turboréacteur, ladite portion de nacelle mobile étant montée coulissante sur ledit mât d'accrochage de manière à pouvoir être déplacée de l'avant vers l'arrière, et inversement. De plus, ladite portion de nacelle mobile présente une paroi annulaire de délimitation interne d'un canal annulaire de flux secondaire, ainsi qu'une paroi annulaire de délimitation externe du canal annulaire de flux secondaire.

En d'autres termes, l'invention propose une portion de nacelle mobile formant enveloppe continue sur 360° autour d'une section du turboréacteur, cette portion de nacelle mobile étant déplaçable à coulissement par rapport au mât d'accrochage, par exemple pour permettre l'accès aux équipements du turboréacteur lors des opérations de maintenance.

La forme particulière de cette portion de nacelle mobile engendre plusieurs avantages, dont celui d'être capable de reprendre des efforts plus importants que ceux supportés par l'assemblage de deux capots en C articulés, rencontré dans l'art antérieur. L'invention apporte donc une véritable solution au problème de déformation du turboréacteur, étant donné que la rigidité élevée de la portion de nacelle mobile contribue en effet à limiter ces déformations.

Par conséquent, cela conduit à une diminution de la flexion du turboréacteur, et engendre donc une baisse significative des potentiels frottements entre les pales tournantes de compresseur et de turbine et le carter central du moteur. Surtout, la diminution de la flexion rend possible l'application de jeux nominaux plus faibles entre les pales et le carter, impliquant avantageusement un gain en terme de performance globale de l'aéronef, ainsi qu'une limitation significative des pertes de rendement.

Par ailleurs, le caractère continu de cette portion de nacelle mobile sur 360° autour d'une section transversale du turboréacteur génère avantageusement une isolation acoustique accrue par rapport à celle rencontrée antérieurement avec l'assemblage des deux capots en C, puisqu'il n'existe plus de discontinuité de matière dans la direction circonférentielle de la nacelle. En particulier, la/les parois de la portion de nacelle mobile peuvent être équipées d'un revêtement acoustique s'étendant de manière continue ou quasi-continue sur 360°, améliorant encore davantage la réduction du bruit s'échappant de la nacelle.

En outre, la nacelle ainsi réalisée permet d'offrir une facilité de maintenance en raison de la simplicité de sa cinématique, et engendre une réduction de masse par rapport aux nacelles connues de l'art antérieur, en particulier en raison de la suppression de certains éléments d'accastillage telles les bielles de compression et les charnières. A cet égard, il est noté que la cinématique de coulissement adoptée répond entièrement au problème de contrainte d'ouverture des capots articulés vis-à-vis de la voilure de l'aéronef, rencontré dans l'art antérieur.

A titre indicatif, cette invention trouve une application particulière dans le cas où toutes les attaches moteur se trouvent agencées sur le carter de soufflante, ce qui permet principalement de libérer toute la partie arrière du moteur, propice à un coulissement sans interférence de la portion de nacelle mobile. En d'autres termes, dans un tel cas, la reprise des efforts générés par le turboréacteur s'effectue exclusivement sur le carter de soufflante à l'aide de toutes les attaches moteur, et permet par conséquent au carter central de ce turboréacteur de ne plus être relié directement au mât d'accrochage par une ou des attaches arrière. Cette disposition particulière des attaches moteur induit par ailleurs également une diminution sensible de la flexion rencontrée au niveau du carter central, que cette flexion soit due aux efforts de poussée générés par le turboréacteur, ou bien due aux charges aérodynamiques, telles que des rafales, susceptibles d'être rencontrées durant les diverses phases de vol de l'aéronef.

Le fait de prévoir les attaches moteur sur le carter de soufflante offre la possibilité de les écarter fortement les unes des autres. Cet écartement important a pour avantage de pouvoir simplifier considérablement la conception de ces attaches moteur, en raison du fait que les efforts qu'elles doivent reprendre, associés à un moment selon un axe donné, sont naturellement affaiblis par rapport à ceux rencontrés dans les solutions dans lesquelles les attaches moteur situées sur le carter central ne pouvaient pas être aussi éloignées les unes des autres.

De préférence, la pluralité d'attaches moteur est constituée d'une première attache moteur et d'une seconde attache moteur situées de façon symétrique par rapport à un plan défini par un axe longitudinal du turboréacteur et une direction verticale de celui-ci, ainsi que d'une troisième attache moteur traversée par ce même plan.

Dans cette configuration, on peut alors prévoir que les première, seconde et troisième attaches moteur sont fixées sur une partie annulaire périphérique du carter de soufflante, ce qui leur permet d'occuper des positions dans lesquelles elles sont avantageusement très éloignées les unes des autres.

De préférence, ladite paroi annulaire de délimitation interne du canal annulaire de flux secondaire, ainsi que la paroi annulaire de délimitation externe du canal annulaire de flux secondaire, sont chacune équipées d'un revêtement de protection acoustique.

Pour optimiser encore davantage la diminution du bruit résultant de l'écoulement du flux secondaire à travers la portion de nacelle mobile, chaque revêtement de protection acoustique est réalisé de manière continue tout autour de sa paroi annulaire associée, à savoir sans discontinuité sur 360°.

De préférence, ladite nacelle comporte en outre une portion de nacelle fixe formant enveloppe d'un seul tenant tout autour d'une section du turboréacteur, ladite portion de nacelle fixe étant montée fixement sur le turboréacteur, par exemple encastrée sur un carter intermédiaire de ce dernier. De plus, ladite portion de nacelle fixe forme support radial interne pour ladite portion de nacelle mobile.

Ainsi, en reposant sur la portion de nacelle fixe directement solidaire du moteur, l'efficacité de la portion de nacelle mobile, dans sa fonction de limitation des déformations du turboréacteur par reprise des efforts, est fortement accrue.

Elle l'est d'autant plus lorsqu'une extrémité arrière d'un carter de soufflante du turboréacteur forme également support radial interne pour cette portion de nacelle.

Dans un tel cas, on peut prévoir que les supports radiaux internes sont des supports annulaires, suivant par exemple une génératrice conique, impliquant notamment que la portion de nacelle mobile est essentiellement sollicitée par des efforts de pression verticaux et transversaux, lors de sa résistance à la déformation du turboréacteur.

Par conséquent, à la fermeture de la portion de nacelle mobile, de préférence obtenue en la déplaçant à coulissement vers l'avant, il se crée deux appuis annulaires, l'un par exemple sur la bride arrière du carter de soufflante, et l'autre sur la portion de nacelle fixe radialement intérieure par rapport à la portion mobile. Ces appuis pourront être conçus plus ou moins rigides, suivant les raideurs et les tolérances recherchées.

D'autre part, pour bloquer la portion mobile longitudinalement par rapport au carter de soufflante, durant les phases de vol de l'aéronef, il peut être prévu deux verrous situés respectivement sur les extrémités latérales du turboréacteur, à savoir à 3h et à 9h sur un plan horizontal de symétrie de celui-ci, positions qui présentent l'avantage d'être donc symétriques, et surtout très visibles et facilement accessibles depuis le sol.

De préférence, ladite portion de nacelle fixe comprend une ou plusieurs trappes ou portes d'accès à des équipements du turboréacteur, classiquement prévus dans un espace annulaire, dit compartiment de nacelle.

Toujours de manière préférentielle, le coulissement de la portion de nacelle mobile par rapport au mât d'accrochage s'effectue grâce à une glissière prévue sur l'un de ces deux éléments, ladite glissière suivant une ligne très légèrement courbe, sensiblement orientée selon une direction longitudinale de l'ensemble moteur.

De façon plus générale, il est indiqué que la glissière définit une trajectoire, de préférence proche de l'horizontale, optimisée pour faciliter la séparation des éléments en présence et s'adapter aux formes du mât et des autres éléments de l'ensemble moteur. Néanmoins, la glissière peut être de toute autre forme que celle horizontale ou proche de l'horizontale, sans sortir du cadre de l'invention.

Enfin, ladite portion de nacelle mobile est conçue pour être déplacée vers l'arrière d'une position normale de vol, à une position de maintenance dans laquelle elle autorise l'accès à des équipements du turboréacteur, et inversement. Dans le cas où le turboréacteur serait équipé d'un système d'inverseur de poussée, celui-ci pourrait être porté par le carter de soufflante du moteur, à l'arrière de celui-ci. Il pourrait alors s'agir d'un système connu de type pétales ou « portes crocodiles », bien que l'on puisse également envisager l'implantation d'un système comprenant des équipements du type « sur étagère », également dénommés équipements remplaçables en escale, ou encore LRU (de l'anglais « Line Replaceable Unit »), installés à l'arrière du carter de soufflante. Dans un tel cas, pour faire fonctionner ce système d'inverseur de poussée, la portion de nacelle mobile est repoussée le long de la glissière de la valeur nécessaire au déploiement des pétales ou équivalents, qui deviennent alors en mesure de renvoyer les efforts de pression directement sur le carter de soufflante.

Il est noté que le coulissement de la portion mobile est susceptible de provoquer une forte perturbation des écoulements à l'arrière du moteur, y compris sur le flux primaire, générant par voie de conséquence une traînée et une perte de poussée tout à fait favorable à l'efficacité du freinage de l'aéronef.

D'une manière générale, il est donc de préférence prévu un système d'inverseur de poussée porté par le carter de soufflante, à l'arrière de celui-ci, ledit système d'inverseur de poussée étant logé dans ladite portion de nacelle mobile lorsque celle-ci occupe une position normale de vol.

L'invention a également pour objet un aéronef comprenant au moins un ensemble moteur tel que celui qui vient d'être présenté.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de côté d'un ensemble moteur pour aéronef, selon un mode de réalisation préféré de la présente invention ;
- la figure 2 représente une vue schématique en perspective de l'ensemble représenté sur la figure 1, le mât d'accrochage et la nacelle ayant été retirés pour laisser plus clairement apparaître le positionnement des attaches moteur ;
- la figure 3 représente une vue similaire à celle montrée sur la figure 1, sur laquelle la partie arrière de la nacelle a été détaillée, la portion mobile de nacelle étant représentée dans sa position avant en traits pleins, et dans sa position arrière en pointillés ;
- la figure 3a représente une vue schématique similaire à celle montrée sur la figure 3, avec la portion mobile de nacelle représentée dans une position intermédiaire entre sa position avant et sa position arrière ;
- la figure 3b représente une vue en coupe prise le long de la ligne IIIb-IIIb de la figure 3a ;
- la figure 4 représente une vue en coupe prise le long de la ligne IV-IV de la figure 3 ; et
- la figure 5 représente une vue schématique de dessus de la partie arrière de nacelle montrée sur les figures précédentes, incorporant un système d'inverseur de poussée.

### EXPOSÉ DÉTAILLÉ DE MODES DE RÉALISATION PRÉFÉRÉS

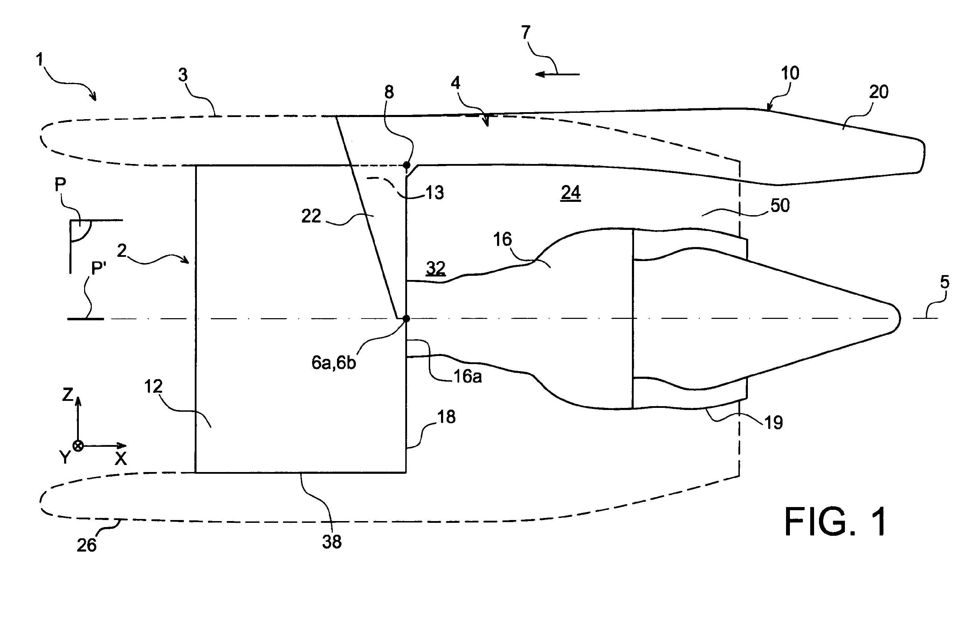

En référence à la figure 1, on voit un ensemble moteur 1 pour aéronef selon un mode de réalisation préféré de la présente invention, cet ensemble 1 étant destiné à être fixé sous une aile d'aéronef (non représenté).

Globalement, l'ensemble moteur 1 comporte un turboréacteur 2, une nacelle 3 montrée schématiquement en pointillés, un mât d'accrochage 4, ainsi qu'une pluralité d'attaches moteur 6a, 6b, 8 assurant la fixation du turboréacteur 2 sous ce mât 4 (l'attache 6b étant masquée par l'attache 6a sur cette figure 1). A titre indicatif, il est noté que le mât d'accrochage 4 comporte une autre série d'attaches (non représentées) permettant d'assurer la suspension de cet ensemble 1 sous la voilure de l'aéronef.

Dans toute la description qui va suivre, par convention, on appelle X la direction parallèle à un axe longitudinal 5 du turboréacteur 2, correspondant également à une direction longitudinale de l'ensemble moteur et du mât, Y la direction orientée transversalement par rapport à ce même turboréacteur 2, correspondant également à une direction transversale de l'ensemble moteur et du mât, et Z la direction verticale ou de la hauteur, ces trois directions étant orthogonales entre-elles.

D'autre part, les termes « avant » et « arrière » sont à considérer par rapport à une direction d'avancement de l'aéronef rencontrée suite à la poussée exercée par le turboréacteur 2, cette direction étant représentée schématiquement par la flèche 7.

Sur la figure 1, on peut voir que seule une structure rigide 10 du mât d'accrochage 4 a été représentée. Les autres éléments constitutifs non représentés de ce mât 4, tels que la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

D'autre part, le turboréacteur 2 dispose à l'avant d'un carter de soufflante 12 de grande dimension délimitant un canal annulaire de soufflante 13, et comporte vers l'arrière un carter central 16 de plus petite dimension, renfermant le coeur de ce turboréacteur. Une extrémité annulaire avant 16a du carter central 16 porte des pales fixes 17 s'étendant radialement, et relient par leurs deux extrémités ce même carter central au carter de soufflante 12. A titre indicatif, cette extrémité avant 16a est également dénommée carter intermédiaire de la turbomachine.

Enfin, le carter central 16 se prolonge vers l'arrière par un carter d'éjection 19, les carters précités étant bien entendu solidaires les uns des autres. Comme cela ressort de ce qui précède, il s'agit ici préférentiellement d'un turboréacteur disposant d'un fort taux de dilution.

Comme on peut l'apercevoir sur la figure 1, dans ce mode de réalisation préféré, les attaches moteur 6a, 6b, 8, de préférence prévues au nombre de trois, sont toutes fixées sur le carter de soufflante 12 susmentionné.

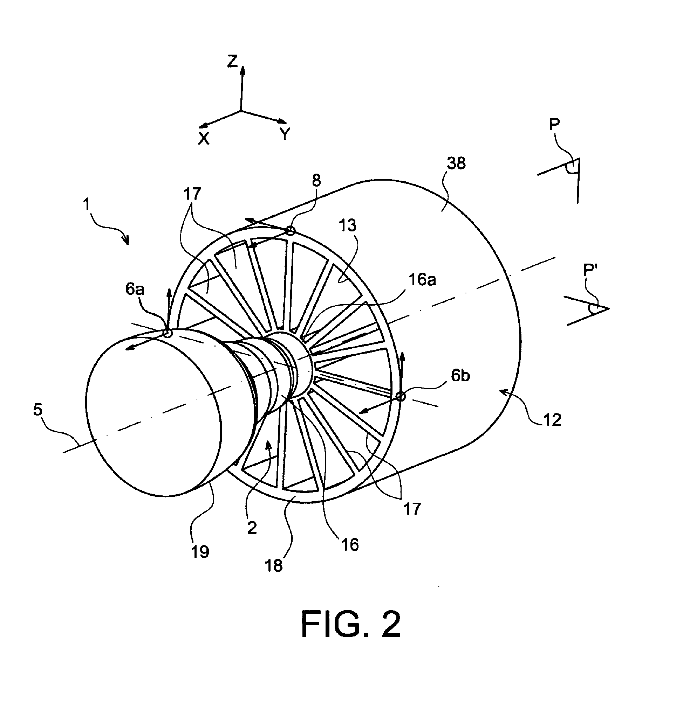

En effet, en référence à présent à la figure 2, on peut voir que la première attache 6a et la seconde attache 6b représentées schématiquement sont disposées de façon symétrique par rapport à un premier plan P vertical, défini par l'axe longitudinal 5 et la direction Z.

Plus précisément, les attaches 6a, 6b sont toutes les deux fixées sur une partie annulaire périphérique 18 du carter de soufflante 12, et de préférence sur l'arrière de cette partie 18, comme cela est représenté schématiquement.

On peut alors prévoir que les première et seconde attaches moteur 6a, 6b sont diamétralement opposées sur la partie annulaire périphérique 18 présentant une surface externe cylindrique 38 du carter de soufflante 12, de sorte que ces attaches 6a, 6b sont donc chacune traversées par un second plan P' défini par l'axe longitudinal 5 et la direction Y.

Comme cela est montré schématiquement par les flèches de la figure 2, chacune des première et seconde attaches moteur 6a, 6b est conçue de manière à pouvoir reprendre des efforts générés par le turboréacteur 2 selon la direction X et selon la direction Z, mais pas ceux s'exerçant selon la direction Y.

De cette manière, les deux attaches 6a, 6b fortement éloignées l'une de l'autre assurent conjointement la reprise du moment s'exerçant selon la direction X, et celle du moment s'exerçant selon la direction Z.

Toujours en référence à la figure 2, on peut voir que la troisième attache moteur 8 représentée schématiquement est aussi fixée sur la partie annulaire périphérique 18 du carter de soufflante 12, également de préférence sur l'arrière de cette partie 18.

A titre indicatif, il est précisé que les attaches 6a, 6b, 8 sont fixées sur la partie annulaire périphérique 18 du carter 12 par l'intermédiaire de parties structurales (non représentées) du moteur, qui sont effectivement de préférence agencées sur l'arrière de la partie annulaire périphérique 18. Néanmoins, il est également possible de rencontrer des moteurs dont les parties structurales sont situées plus vers l'avant sur la partie annulaire périphérique 18, impliquant que les attaches 6a, 6b, 8 sont elles aussi fixées plus vers l'avant du moteur, toujours sur la partie annulaire périphérique 18 du carter de soufflante 12.

En ce qui concerne la troisième attache 8, celle-ci se situe sur la partie la plus haute du carter de soufflante 12, donc sur la partie la plus haute de la partie annulaire périphérique 18, et est par conséquent traversée fictivement par le premier plan P indiqué ci-dessus.

Comme cela est montré schématiquement par les flèches de la figure 2, la troisième attache moteur 8 est conçue de manière à pouvoir reprendre des efforts générés par le turboréacteur 2 selon la direction X et selon la direction Y, mais pas ceux s'exerçant selon la direction Z.

De cette manière, cette troisième attache 8 assure conjointement avec les deux attaches 6a, 6b la reprise du moment s'exerçant selon la direction Y.

Il est noté que si les attaches moteur 6a, 6b, 8 ont été représentées de façon schématique sur les figures 1 et 2, il est à comprendre que ces attaches peuvent être réalisées selon toute forme connue de l'homme du métier, telle que par exemple celle relative à l'assemblage de manilles et de ferrures.

L'avantage principal associé à la configuration qui vient d'être décrite réside dans le fait que la totale liberté du carter central 16 vis-à-vis des attaches moteur 6a, 6b, 8 entraîne une diminution considérable de la flexion de ce carter durant les diverses situations de vol de l'aéronef, et provoque donc une baisse significative de l'usure par frottement des pales de compresseur et de turbine contre ce carter central 16. De plus, comme cela sera détaillé ci-après, cette configuration dans laquelle la partie arrière du turboréacteur est dépourvue d'attache moteur permet de mettre en mouvement de coulissement une partie de la nacelle.

De retour à la figure 1, sur laquelle la nacelle 3 a été uniquement représentée schématiquement en pointillés, on peut s'apercevoir que la structure rigide 10 du mât, conçue de manière à présenter une symétrie par rapport au premier plan P indiqué ci-dessus, comporte un caisson central de torsion 20, qui s'étend d'un bout à l'autre de la structure 10 dans la direction X, parallèlement à cette même direction. A titre indicatif, ce caisson 20 peut être formé par l'assemblage de deux longerons latéraux s'étendant selon la direction X dans des plans XZ parallèles, et raccordés entre eux par l'intermédiaire de nervures transversales qui sont quant à elles orientées dans des plans YZ parallèles.

De plus, à l'avant du caisson 20, sont agencées de part et d'autre de ce dernier deux structures latérales 22 (une seule étant visible en raison de la vue de côté), respectivement prévues pour porter les attaches 6a et 6b à leurs extrémités basses. A titre indicatif, ces deux structures latérales 22 peuvent également prendre la forme d'un caisson rapporté à l'avant et latéralement sur le caisson 20, sans sortir du cadre de l'invention.

Par ailleurs, bien que cela n'ait pas été représenté, les éléments 22, 22 pris conjointement peuvent délimiter une partie d'une surface fictive sensiblement cylindrique de section circulaire, et d'axe longitudinal parallèle au caisson central 20. En d'autres termes, les structures latérales 22 disposent de préférence chacune d'une courbure adaptée pour pouvoir se positionner autour et au contact de cette surface fictive, sur toute leur longueur. Ainsi, d'une manière générale, la structure rigide 10 forme une portion d'une enveloppe/cage sensiblement cylindrique de section circulaire, susceptible d'être positionnée autour et à distance du carter central 16 du turboréacteur 2.

Pour créer le moins de perturbation possible du flux secondaire s'échappant du canal annulaire de soufflante 13, et entrant dans le canal annulaire de flux secondaire référencé 24 sur la figure 1, le diamètre de la surface fictive cylindrique est de préférence sensiblement identique au diamètre de la surface externe cylindrique 38 de la partie annulaire 18 du carter de soufflante 12.

La nacelle 3, entourant le turboréacteur 2, comprend une partie avant présentant une entrée d'air 26, cette partie avant de conception classique s'étendant jusqu'à l'extrémité arrière 18 du carter de soufflante 12. La partie arrière de la nacelle, issue de l'extrémité arrière 18 précitée, est spécifique à la présente invention, et va maintenant être décrite en référence aux figures suivantes.

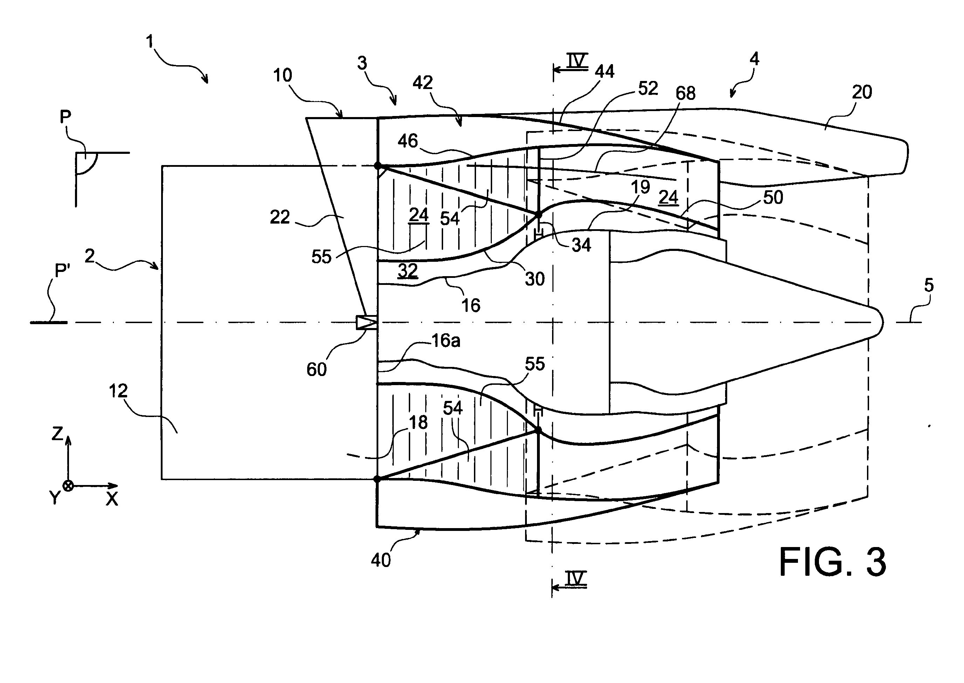

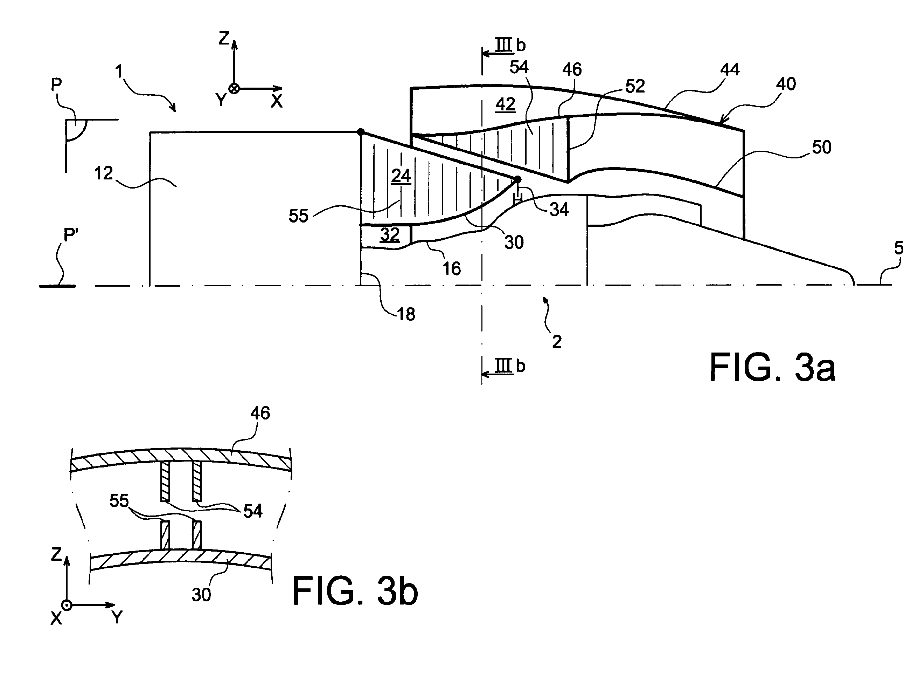

En effet, en référence aux figures 3 à 4, on peut voir que la partie arrière de la nacelle 3, s'étendant à partir de l'extrémité arrière 18 du carter 12, comporte tout d'abord une portion annulaire de nacelle fixe 30, formant enveloppe d'un seul tenant tout autour d'une section du turboréacteur, et plus précisément autour du carter central 16. Cette portion fixe 30 est encastrée sur le carter intermédiaire 16a, et s'étend annulairement vers l'arrière en suivant le profil du carter central 16, avec lequel il définit un espace annulaire 32 habituellement dénommé compartiment de nacelle, dans lequel sont placés une pluralité d'équipements (non représentés). D'ailleurs, la portion fixe 30, délimitant radialement vers l'extérieur le compartiment nacelle 32, comprend une ou plusieurs trappes ou portes d'accès (non représentées) aux équipements du turboréacteur, montées par exemple de manière articulée.

L'extrémité arrière de la portion fixe 30 est supportée par une couronne 34 reposant sur le carter central 16, cette couronne 34, permettant de s'affranchir de la dilatation thermique du turboréacteur, étant par exemple réalisée à l'aide d'anneaux et de bielles radiales reliant ces anneaux.

La portion fixe 30 délimite également radialement vers l'extérieur la partie avant du canal annulaire de flux secondaire 24, prolongeant vers l'arrière le canal annulaire de soufflante 13.

L'une des particularités de la présente invention réside dans la présence d'une portion de nacelle mobile 40, représentée sur la figure 3 en traits pleins dans sa position normale de vol, et en pointillés dans sa position de maintenance.

Dans sa position normale de vol, la portion de nacelle mobile 40 s'étend sensiblement de l'extrémité 18 du carter 12 jusqu'à l'extrémité arrière de la nacelle, et forme une enveloppe autour de la partie fixe 30. Plus précisément, la portion mobile 40 forme enveloppe d'un seul tenant tout autour d'une section du turboréacteur, section qui est donc initiée à partir du carter intermédiaire 16a ou de l'extrémité arrière 18 du carter de soufflante 12, et qui s'étend jusqu'au carter d'éjection 19. Comme cela sera détaillé ultérieurement, la portion de nacelle mobile 40 présente la particularité d'être montée coulissante sur la structure rigide 10, de manière à pouvoir être déplacée de l'avant vers l'arrière, et inversement.

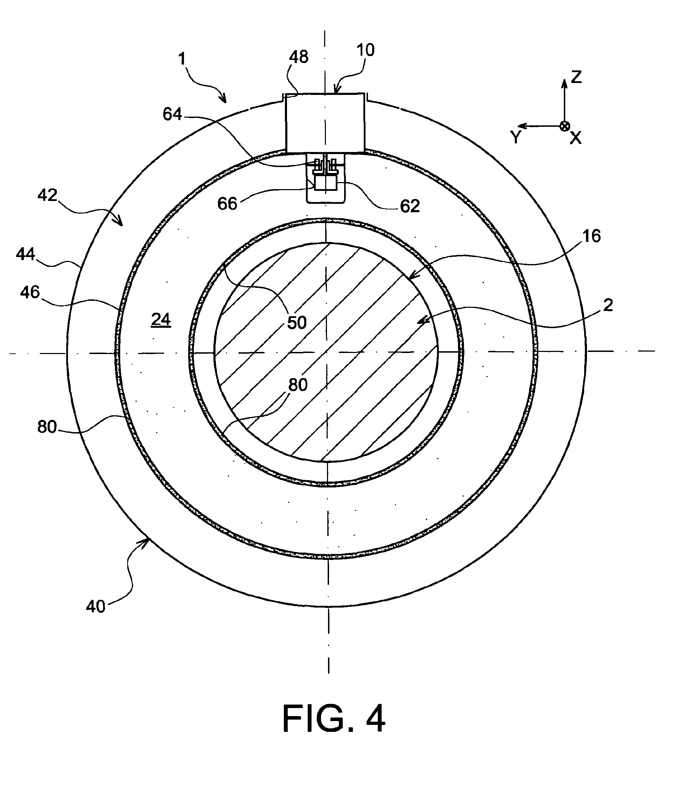

La portion mobile 40 présente tout d'abord une enveloppe annulaire extérieure 42, délimitée extérieurement par une surface extérieure aérodynamique de nacelle 44, et intérieurement par une paroi annulaire 46 de délimitation externe du canal annulaire de flux secondaire. Vers l'avant, la surface 44 et la paroi 46 sont écartées radialement, et s'étendent vers l'arrière en se rapprochant progressivement l'une de l'autre, jusqu'à entrer en contact comme le montre la partie arrière de la portion mobile 40. La figure 4 montre que cette enveloppe 40 dispose au niveau de son extrémité supérieure d'un renfoncement longitudinal 48 assurant le logement de la structure rigide 10.

En outre, la portion mobile 40 centrée sur l'axe 5 en position normale de vol comprend une paroi annulaire 50 de délimitation interne du canal annulaire de flux secondaire, située donc radialement vers l'intérieur par rapport à la paroi 46. Les deux parois 46, 50 sont reliées rigidement entre elles à l'aide d'une jante 52, pouvant par exemple prendre la forme d'une pluralité de bras radiaux espacés circonférentiellement les uns des autres, et agencés de manière à être traversés par le flux secondaire sans générer de perturbations aérodynamiques trop contraignantes. Ainsi, les bras radiaux 52 de forme aérodynamique et reliant les parois 46 et 50 sont localisés dans un plan transversal YZ proche ou confondu avec celui de la couronne 34, permettant ainsi de capter à la source les efforts d'inertie générés par les masses du moteur, ces efforts remontant par exemple directement dans le mât depuis la portion mobile 40 via une paire de spigots (non représentés) situés dans ce même plan YZ, de part et d'autre de la structure rigide du mât.

En référence plus précisément aux figures 3, 3a et 3b, la rigidité longitudinale de la portion mobile 40 est d'autre part renforcée par la présence de parois radiales longitudinales formant bifurcations, ces parois étant référencées 54 et 55. Les parois 54, 55 sont par exemple positionnées en extrémité supérieure et en extrémité supérieure par rapport à la partie fixe 30, à savoir à des positions dites à 6h et à 12h. Elles sont réalisées dans des plans XZ, avec une largeur suffisamment faible pour minimiser la traînée. De plus, pour les parois 54 portées par l'enveloppe 40, on pourra faire en sorte que leur bord de fuite est maintenu coïncidant ou en avant du bord de fuite externe de la nacelle.

Ces parois 54, 55, coïncidant deux à deux, sont donc respectivement portées par l'enveloppe mobile 40, et la partie fixe 30. Elles disposent de chants en regard de forme complémentaire, de manière à ce qu'ils s'épousent deux à deux en position de vol. La figure 3b montre que la paroi annulaire 46 peut porter deux parois radiales longitudinales 54 légèrement espacées circonférentiellement l'une de l'autre au niveau de sa partie radiale supérieure, à 6h, ces deux parois 54 étant destinées à coopérer respectivement avec deux parois radiales longitudinales 55 leur faisant face, et issues de la paroi annulaire fixe 30.

Un agencement analogue de parois 54, 55 peut être prévu en extrémité radiale inférieure de la partie fixe 30, à 12h, comme cela est montré en vue de côté sur la figure 3.

Ainsi, lorsque la portion mobile 40 occupe sa position normale de vol, le canal annulaire de flux secondaire 24 est délimité radialement vers l'extérieur, à partir de l'extrémité 18 du carter de soufflante, uniquement par la paroi externe 46 jusqu'à l'extrémité arrière de la nacelle, tandis qu'il est délimité radialement vers l'intérieur, à partir de l'extrémité 18 du carter de soufflante, par la portion fixe 30, suivie de la paroi interne 50 se trouvant dans la continuité aérodynamique de cette même portion.

A cet égard, l'extrémité avant de la paroi interne 50 repose sur l'extrémité arrière de la portion fixe 30, qui forme ainsi un support radial annulaire interne pour la portion mobile 40. Le contact annulaire établi entre les deux éléments se situe au droit de la couronne de support 34, pour un meilleur transfert des efforts latéraux et verticaux du turboréacteur vers la nacelle, en vue de la limitation de sa flexion. Ainsi, les efforts transitent successivement et sensiblement dans un même plan transversal YZ par le carter 16, la couronne 34, la portion fixe 30, le contact annulaire précité, les bras radiaux 52 formant jantes, et des spigots rapportés sur la structure rigide du mât.

De la même manière, l'extrémité avant de la paroi 46 repose sur l'extrémité annulaire 18 du carter de soufflante, formant ainsi une autre bride annulaire de support de la portion mobile 40, décalée vers l'avant. Ici encore, en reposant sur le carter de soufflante, l'efficacité de la portion de nacelle mobile 40, dans sa fonction de limitation des déformations du turboréacteur par reprise des efforts de pression verticaux et transversaux, est fortement accrue. Elle l'est d'ailleurs d'autant plus par le fait que dans cette position, les parois précitées 54, 55 sont en contact deux à deux par leurs chants respectifs, tel que cela est montré sur la figure 3.

Par conséquent, à la fermeture de la portion de nacelle mobile 40, obtenue en la déplaçant à coulissement vers l'avant comme détaillé ci-dessous, il se crée deux appuis annulaires, ces appuis pouvant être conçus plus ou moins rigides, suivant les raideurs et les tolérances recherchées. Il se crée également des appuis linéaires entre les chants longitudinaux en regard deux à deux des parois précitées 54, 55.

D'autre part, pour bloquer la portion mobile 40 dans sa position normale de vol, c'est-à-dire longitudinalement par rapport au carter de soufflante 12 et au mât 4, il est prévu deux verrous 60 situés par exemple respectivement sur les extrémités latérales du turboréacteur, à savoir à 3h et à 9h, dans le plan P' et symétriquement par rapport au plan P, positions qui présentent l'avantage d'être très visibles et facilement accessibles depuis le sol. Comme cela est représenté, il est possible de prévoir les verrous 60 (un seul étant visible sur la figure 3 en raison de la vue de côté) respectivement solidaires des extrémités basses des deux caissons latéraux 22 de la structure rigide, sans sortir du cadre de l'invention.

Par conséquent, la portion mobile 40 est maintenue dans les trois directions X, Y et Z, étant noté la possibilité d'adjoindre sur la portion mobile 40 des pions longitudinaux susceptibles de pénétrer automatiquement dans des orifices correspondant pratiqués dans le carter de soufflante 12 ou la structure rigide 10, lors de son déplacement vers sa position normale de vol.

Ce déplacement est réalisé à l'aide d'une glissière 62 prévue sur la structure rigide du mât d'accrochage, également dénommée structure primaire, cette glissière 62, par exemple en forme de rail, coopérant avec des patins 64 portés par la portion mobile 40 comme le montre la figure 4, même si une solution inversée pourrait être envisagée, sans sortir du cadre de l'invention.

La glissière 62 est alors agencée dans un renfoncement longitudinal 66 pratiqué dans la partie supérieure de la paroi externe 46 et logeant également les patins 64 portés par cette paroi 46, la glissière suivant une ligne très légèrement courbe référencée 68 sur la figure 3, sensiblement orientée selon la direction X. De façon plus générale, la glissière 62 définit une ligne/trajectoire 68 proche de l'horizontale, mais optimisée pour faciliter la séparation des éléments en présence et s'adapter aux formes du mât et des autres éléments de l'ensemble moteur. En l'occurrence, la forme légèrement courbe adoptée, orientée vers l'axe 5, entraîne un décentrage de la portion mobile 40 vis-à-vis de cet axe 5 lorsqu'elle est déplacée vers l'arrière dans sa position de maintenance représentée en pointillés, la portion 40 étant en effet déplacée vers le bas par rapport à cet axe longitudinal 5. Dans la position de maintenance, la portion de nacelle mobile 40 d'un seul tenant est suffisamment dégagée vers l'arrière pour permettre l'accès aux équipements du turboréacteur, via les trappes d'accès rendues accessibles par le retrait de la portion 40. A ce titre, il est par exemple fait en sorte que la portion mobile 40 se dégage jusqu'à ce que son extrémité avant arrive à proximité de l'extrémité arrière de la portion fixe 30, comme montré sur la figure 3. De plus, lors de ce dégagement vers l'arrière de la portion mobile 40, de préférence automatisé tout comme son déplacement vers l'avant pour un retour à la position normale de vol, la portion 40 se déplace relativement par rapport au mât par coulissement longitudinal de la structure rigide dans le renfoncement longitudinal 48. En outre, la mise en mouvement de la portion 40 est bien entendu facilitée par l'absence d'attache moteur arrière, comme indiqué précédemment.

Sur cette même figure, on peut clairement apercevoir que la portion mobile 40 forme enveloppe d'un seul tenant entourant sans discontinuité, sur 360°, une section transversale du turboréacteur. Plus précisément, ce sont les parois concentriques 46 et 50, délimitant le canal de flux secondaire 24, qui forment chacune une enveloppe d'un seul tenant entourant sur 360°, sans discontinuité, une section donnée du turbopropulseur.

Le caractère continu sur 360° de chaque paroi 46, 50 permet de limiter fortement le bruit résultant de l'écoulement du flux secondaire dans la partie arrière de la nacelle, ce bruit étant d'ailleurs encore plus atténué par l'adjonction d'un revêtement de protection acoustique 80 réalisé de manière continue tout autour de chacune de ces parois annulaires 46, 50. En particulier, sur la paroi externe 46 intégrant le renfoncement 66 sur son extrémité supérieure, le revêtement 80 suit le profil en U du renfoncement 66 lors de son passage de l'un à l'autre des deux éléments en forme globale de C constitutifs de la paroi 46, comme cela est clairement visible sur la figure 4.

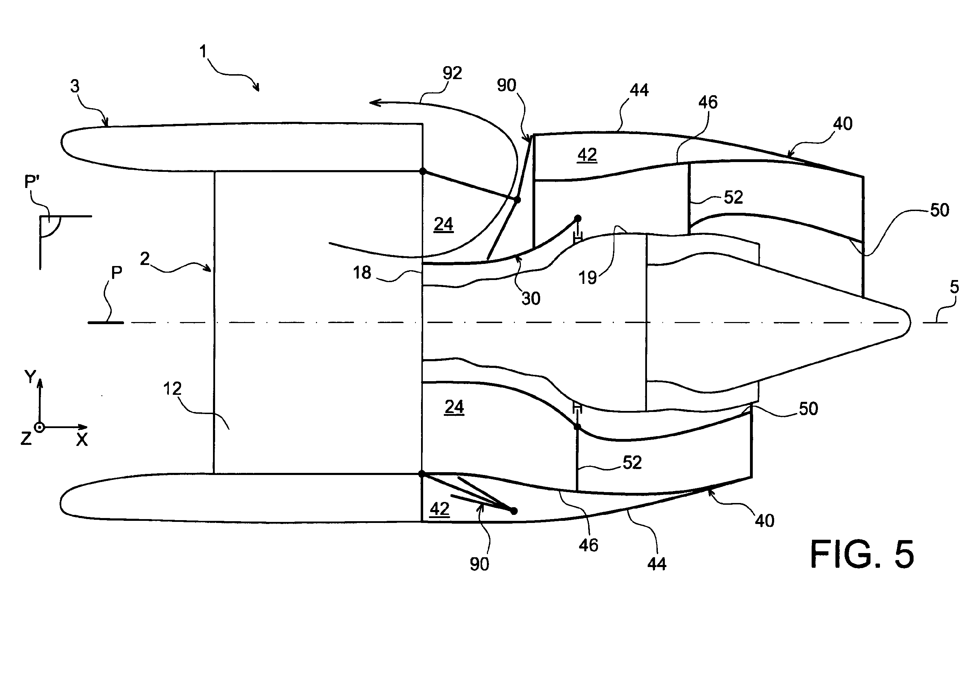

Sur la figure 5, on voit la partie arrière de la nacelle incorporant un système d'inverseur de poussée 90, la demi-vue inférieure montrant le système en configuration rétractée avec la portion mobile 40 en position normale de vol, et la demi-vue supérieure montrant le système en configuration déployée avec la portion mobile 40 en position vers l'arrière, correspondant par exemple à la position de maintenance dans laquelle elle autorise l'accès à des équipements du turboréacteur.

Comme on peut le voir sur cette figure 5, le système 90 est porté de préférence par l'extrémité annulaire 18 précitée du carter de soufflante 12, à l'arrière de celui-ci. Il peut alors s'agir d'un système connu de type pétales ou « portes crocodiles », bien que l'on puisse également envisager l'implantation d'un système comprenant des équipements du type « sur étagère », également dénommés équipements remplaçables en escale, ou encore LRU (de l'anglais « Line Replaceable Unit »), installés à l'arrière du carter de soufflante.

Dans un tel cas, pour faire fonctionner ce système d'inverseur de poussée 90, la portion de nacelle mobile 40 est repoussée le long de la glissière de la valeur nécessaire au déploiement des pétales ou équivalents, qui en se déployant dans le canal annulaire secondaire 24 comme montré par la demi-vue supérieure, deviennent alors en mesure de renvoyer les efforts de pression directement sur le carter de soufflante, en créant une inversion de sens des gaz schématisée par la flèche 92. Plus précisément, les pétales ou « portes crocodiles » déployés dans le canal secondaire 24 permettent de dévier l'air qui ne peut plus se propager vers l'arrière, mais qui est forcé par son entrée en contact avec les pétales de s'extraire hors de la nacelle, avec une forte composante de direction allant dans le sens inverse de celui d'avancement de l'aéronef.

En revanche, lorsque la portion de nacelle mobile 40 occupe sa position normale de vol, chaque pétale ou « porte crocodile » est logé entre les parois annulaires 44, 46 formant enveloppe annulaire extérieure 42, comme montré par la demi-vue inférieure. Ainsi, le système d'inverseur 90 ne crée aucune perturbation du flux secondaire, puisqu'il ne pénètre pas dans le canal annulaire secondaire 24. De plus, son implantation n'entraîne aucune discontinuité dans les revêtements de protection acoustique 80. Par ailleurs, les pétales ou « portes crocodiles » se déploient dans le même espace annulaire 24 que celui dans lequel se trouvent les parois longitudinales 54, 55 précitées, étant néanmoins précisé que la position circonférentielle des pétales ou « portes crocodiles » par rapport aux parois 54, 55 est adoptée de sorte qu'il n'y ait pas d'interférence mécanique entre ceux-ci.

Naturellement, les commandes de déploiement des pétales ou « portes crocodiles » et de déplacement de la portion mobile 40 sont séquencées de manière à n'engendrer aucune interférence mécanique entre ces éléments, ces commandes s'ajoutant bien entendu à celle du pilotage des verrous 60 autorisant/interdisant le déplacement de la portion mobile 40.

Bien entendu, diverses modifications peuvent être apportées par l'homme du métier à l'ensemble moteur 1 pour aéronef qui vient d'être décrit, uniquement à titre d'exemple non limitatif. A cet égard, on peut notamment indiquer qui si l'ensemble moteur 1 a été présenté dans une configuration adaptée pour qu'il soit suspendu sous la voilure de l'aéronef, cet ensemble 1 pourrait également se présenter dans une configuration différente lui permettant d'être monté au-dessus de cette même voilure, ou encore sur une partie arrière du fuselage, de préférence latéralement.

## Revendications

1. Ensemble moteur (1) pour aéronef comprenant un turboréacteur (2), un mât d'accrochage (4) du turboréacteur, ainsi qu'une nacelle (3) montée sur le mât d'accrochage et entourant ledit turboréacteur (2), ladite nacelle comportant au moins une portion de nacelle mobile (40) formant enveloppe d'un seul tenant tout autour d'une section du turboréacteur,
ladite portion de nacelle mobile (40) présente une paroi annulaire (50) de délimitation interne d'un canal annulaire de flux secondaire (24), ainsi qu'une paroi annulaire (46) de délimitation externe du canal annulaire de flux secondaire, ladite paroi annulaire (50) de délimitation interne d'un canal annulaire de flux secondaire (24) ainsi que ladite paroi annulaire (46) de délimitation externe du canal annulaire de flux secondaire étant chacune équipée d'un revêtement de protection acoustique (80),
**caractérisé en ce que**
ladite portion de nacelle mobile (40) est montée coulissante sur ledit mât d'accrochage de manière à pouvoir être déplacée de l'avant vers l'arrière, et inversement,
et **en ce qu'**une extrémité arrière (18) d'un carter de soufflante (12) du turboréacteur, sur laquelle sont fixées chacune des attaches moteur (6a, 6b, 8) assurant la fixation du turboréacteur (2) au mât (4), forme support radial interne pour ladite portion de nacelle mobile (40).

2. Ensemble moteur (1) pour aéronef selon la revendication 1, **caractérisé en ce que** chaque revêtement de protection acoustique (80) est réalisé de manière continue tout autour de sa paroi annulaire associée (46, 50).

3. Ensemble moteur (1) pour aéronef selon l'une quelconque des revendications précédentes, **caractérisé en ce que** ladite nacelle comporte en outre une portion de nacelle fixe (30) formant enveloppe d'un seul tenant tout autour d'une section du turboréacteur, ladite portion de nacelle fixe étant montée fixement sur le turboréacteur (2), et **en ce que** ladite portion de nacelle fixe (30) forme support radial interne pour ladite portion de nacelle mobile (40).

4. Ensemble moteur (1) pour aéronef selon la revendication 3, **caractérisé en ce que** les supports radiaux internes sont des supports annulaires.

5. Ensemble moteur (1) pour aéronef selon l'une quelconque des revendications précédentes combinée à la revendication 3, **caractérisé en ce que** ladite portion de nacelle fixe (30) comprend une ou plusieurs trappes d'accès à des équipements du turboréacteur.

6. Ensemble moteur (1) pour aéronef selon l'une quelconque des revendications précédentes, **caractérisé en ce que** le coulissement de la portion de nacelle mobile (40) par rapport au mât d'accrochage (4) s'effectue grâce à une glissière (62) prévue sur l'un de ces deux éléments, ladite glissière (62) suivant une ligne (68) très légèrement courbe, sensiblement orientée selon une direction longitudinale (X) de l'ensemble moteur.

7. Ensemble moteur (1) pour aéronef selon l'une quelconque des revendications précédentes, **caractérisé en ce qu'**il comprend un système d'inverseur de poussée (90) porté par le carter de soufflante (12), à l'arrière de celui-ci, ledit système d'inverseur de poussée (90) étant logé dans ladite portion de nacelle mobile (40) lorsque celle-ci occupe une position normale de vol.

8. Aéronef **caractérisé en ce qu'**il comprend au moins un ensemble moteur (1) selon l'une quelconque des revendications précédentes.

## Claims

1. An engine assembly (1) for an aircraft comprising a turbojet (2), a turbojet attachment pylon (4), as well as a nacelle (3) mounted to the attachment pylon and surrounding said turbojet (2), said nacelle including at least one movable nacelle portion (40) forming an integral envelope all around a section of the turbojet,
said movable nacelle portion (40) has an annular wall (50) for internally bounding a bypass air annular channel (24), as well as an annular wall (46) for externally bounding the bypass air annular channel, said annular wall (50) for internally bounding the bypass air annular channel (24), as well as said annular wall (46) for externally bounding the bypass air annular channel each being provided with an acoustic shielding lining (80);
**characterised in that** said movable nacelle portion (40) is slidably mounted to said attachment pylon so as to be movable fore-and-aft and conversely,
and **in that** a back end (18) of a fan casing (12) of the turbojet, on which each of the engine mounts (6a, 6b, 8) is fastened providing fastening of the turbojet (2) to the pylon (4), provides an inner radial support for said movable nacelle portion (40).

2. The engine assembly (1) for an aircraft according to claim 1, **characterised in that** each acoustic protective lining (80) is continuously made all around the associated annular wall (46, 50) thereof.

3. The engine assembly (1) for an aircraft according to any of the preceding claims, **characterised in that** the nacelle further includes a fixed nacelle portion (30) forming an integral envelope all around a section of the turbojet, said fixed nacelle portion being fixedly mounted to the turbojet (2), and **in that** said fixed nacelle portion (30) provides inner radial support for said movable nacelle portion (40).

4. The engine assembly (1) for an aircraft according to claim 3, **characterised in that** the inner radial supports are annular supports.

5. The engine assembly (1) for an aircraft according to any of the preceding claims, when combined to claim 3, **characterised in that** said fixed nacelle portion (30) comprises one or more turbojet equipment access doors.

6. The engine assembly (1) for an aircraft according to any of the preceding claims, **characterised in that** sliding of the movable nacelle portion (40) with respect to the attachment pylon (4) is performed with a slide (62) provided on either one of both elements, said slide (62) following a very slightly curved line (68), substantially directed along a longitudinal direction (X) of the engine assembly.

7. The engine assembly (1) for an aircraft according to any of the preceding claims, **characterised in that** it comprises a thrust reverser system (90) carried by the fan casing (12), at the rear thereof, said thrust reverser system (90) being accommodated in said movable nacelle portion (40) when this assumes a normal flight position.

8. An aircraft **characterised in that** it comprises at least one engine assembly (1) according to any of the preceding claim.

## Patentansprüche

1. Triebwerkanordnung (1) für ein Luftfahrzeug, umfassend ein Turbostrahltriebwerk (2), ein Aufhängungssystem (4) des Turbostrahltriebwerks sowie eine Gondel (3), die an dem Aufhängungssystem angebracht ist und das Turbostrahltriebwerk (2) umschließt, wobei die Gondel mindestens einen beweglichen Gondelbereich (40) aufweist, der eine einstückige Hülle vollständig um einen Abschnitt des Turbostrahltriebwerks herum bildet, wobei der bewegliche Gondelbereich (40) eine Ringwand (50) als innere Begrenzung eines Ringkanals für einen Nebenstrom (24) sowie eine Ringwand (46) als äußere Begrenzung des Ringkanals des Nebenstroms aufweist, wobei die Ringwand (50) als innere Begrenzung des Ringkanals des Nebenstroms (24) sowie die Ringwand (46) als äußere Begrenzung des Ringkanals des Nebenstroms jeweils mit einer Verkleidung zum akustischen Schutz (80) ausgestattet sind,
**dadurch gekennzeichnet, dass** der bewegliche Gondelbereich (40) an dem Aufhängungssystem derart verschiebbar angebracht ist, dass er von vorne nach hinten und umgekehrt versetzt werden kann,
und dass ein hinteres Ende (18) eines Fangehäuses (12) des Turbostrahltriebwerks, an dem jeweils die Triebwerkaufhängungen (6a, 6b, 8), die die Befestigung des Turbostrahltriebwerks (2) an dem System (4) gewährleisten, befestigt sind, für den beweglichen Gondelbereich (40) einen inneren radialen Träger bildet.

2. Triebwerkanordnung (1) für ein Luftfahrzeug nach Anspruch 1, **dadurch gekennzeichnet, dass** jede Verkleidung zum akustischen Schutz (80) kontinuierlich vollständig um die zugeordnete Ringwand (46, 50) herum ausgeführt ist.

3. Triebwerkanordnung (1) für ein Luftfahrzeug nach einem der vorhergehenden Ansprüche, **dadurch gekennzeichnet, dass** die Gondel ferner einen feststehenden Gondelbereich (30) aufweist, der eine einstückige Hülle vollständig um einen Abschnitt des Turbostrahltriebwerks herum bildet, wobei der feststehende Gondelbereich fest an dem Turbostrahltriebwerk (2) angebracht ist, und dass der feststehende Gondelbereich (30) für den beweglichen Gondelbereich (40) einen inneren radialen Träger bildet.

4. Triebwerkanordnung (1) für ein Luftfahrzeug nach Anspruch 3, **dadurch gekennzeichnet, dass** die inneren radialen Träger Ringträger sind.

5. Triebwerkanordnung (1) für ein Luftfahrzeug nach einem der vorhergehenden Ansprüche in Kombination mit Anspruch 3, **dadurch gekennzeichnet, dass** der feststehende Gondelbereich (30) eine oder mehrere Klappen zum Zugang zu Einrichtungen des Turbostrahltriebwerks aufweist.

6. Triebwerkanordnung (1) für ein Luftfahrzeug nach einem der vorhergehenden Ansprüche, **dadurch gekennzeichnet, dass** das Verschieben des beweglichen Gondelbereichs (40) in Bezug auf das Aufhängungssystem (4) mittels einer Gleitschiene (62), die an einem dieser beiden Elemente angebracht ist, erfolgt, wobei die Gleitschiene (62) einer sehr leicht gekrümmten Linie (68), die im Wesentlichen längs einer Längsrichtung (X) der Triebwerkanordnung ausgerichtet ist, folgt.

7. Triebwerkanordnung (1) für ein Luftfahrzeug nach einem der vorhergehenden Ansprüche, **dadurch gekennzeichnet, dass** sie ein Schubumkehrsystem (90), das vom Fangehäuse (12) getragen wird, hinter diesem aufweist, wobei sich das Schubumkehrsystem (90) in dem beweglichen Gondelbereich (40) befindet, wenn dieser eine normale Flugposition einnimmt.

8. Luftfahrzeug, **dadurch gekennzeichnet, dass** es mindestens eine Triebwerkanordnung (1) nach einem der vorhergehenden Ansprüche aufweist.
